# EUROPEAN PATENT APPLICATION

(11) **EP 3 524 408 A1**
(43) Date of publication of application: **14.08.2019**
(21) Application number: 18155596.2
(22) Date of filing: 07.02.2018
(51) Int. Cl.: B29C 64/268, B29C 64/153, B29C 64/393, B33Y 50/02, B22F 3/105, G02B 7/28

(54) **APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Hunze, Stephan, 01796 Pirna (DE)
(74) Representative: Hafner & Kohl

(57) **Abstract**

Apparatus (1) for additively manufacturing three-dimensional objects (2) by means of successive layerwise selective irradiation and consolidation of layers of a build material (3) which can be consolidated by means of an energy beam (5), wherein a determination device (6) is provided that is adapted to determine at least one parameter relating to a focal position (7) of the energy beam (5) and/or a deviation from a nominal focal position, wherein the determination is based on an angular deviation of at least one part of the energy beam (5) relative to a nominal angle.

## Description

The invention relates to an apparatus for additively manufacturing three-dimensional objects by means of successive layerwise selective irradiation and consolidation of layers of a build material which can be consolidated by means of an energy beam.

Apparatuses for additively manufacturing of three-dimensional objects are generally known from prior art. Such apparatuses typically use irradiation devices that are adapted to generate and/or guide an energy beam over a surface of build material, usually arranged in a build plane. Due to the selective irradiation of the build material, the build material may be selectively consolidated. By irradiating and thereby consolidating build material and alternatingly applying fresh layers of build material, the object may be layerwise built.

The consolidation behavior of the build material that is irradiated with the energy beam strongly depends on parameters of the energy beam, e.g. influencing the energy that is depleted in the build material. In other words, the parameters the control of the irradiation device is based on influence the consolidation behavior of the build material and thereby have an impact on the quality, in particular mechanical properties, of the object.

One of the key parameters is the focal position of the energy beam or, in other words, it is crucial to ensure that the energy beam is properly focused. As the spot size of the energy beam on the build material defines how much energy is depleted (per area) in the build material and also the spot size influences the structure or pattern that is irradiated in the build material, monitoring the spot size is important to ensure the object quality and/or a process quality is met, e.g. by ensuring the proper energy and/or intensity of the energy beam is used. For example, if the actual focal position of the energy beam deviates from a nominal focal position, a desired spot size is not met. Thus, the pattern that has to be irradiated in the build material will also deviate from the nominal pattern as structural elements of the object, e.g. line thicknesses, deviate from their nominal values. Additionally, the intensity or the energy per area deviates from the nominal energy per area, as the spot size, i.e. the area over which the energy of the energy beam is distributed, deviates from its nominal value, as well.

However, known approaches are limited by the response time of sensors, in particular on the conditions of rapid changing focal lengths of the optical systems used for additively manufacturing of three-dimensional objects. In known additive manufacturing apparatuses rapidly changing focal lengths may be misinterpreted as, e.g. thermal induced, focal shifts.

It is an object of the present invention to provide an apparatus for additively manufacturing of three-dimensional objects, wherein the determination of the focal position of the energy beam is improved.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to an apparatus that is adapted to determine the focal position, i.e. in which the focal position may be monitored. The invention is based on the idea that a determination device is provided which is adapted to determine at least one parameter relating to a focal position of the energy beam and/or a deviation from a nominal focal position, wherein the determination is based on an angular deviation of at least one part of the energy beam relative to a nominal angle. Thus, a nominal angle can be defined under which the energy beam is incident on the determination device, for example on a beam splitter guiding the energy beam partially to the determination device, wherein the energy beam is incident under the nominal angle, if the energy beam is properly focused, i.e. the focal position meets a nominal focal position.

Hence, if the focal position of the energy beam deviates from a nominal focal position, the angle under which the energy beam is incident on the determination device will also deviate from the nominal angle that is defined for the properly focused energy beam. Therefore, it is possible to determine whether the energy beam is properly focused or whether a deviation from a nominal focal position is present by determining the angle under which the energy beam is incident, in particular determining the angular deviation of at least one part of the energy beam relative to the nominal angle. Thus, based on the determined nominal angle, it is possible to determine the at least one parameter relating to a focal position of the energy beam. In other words, the focal position and/or the deviation from a nominal focal position of the energy beam may be determined based on the determined angular deviation.

This allows for determining the at least one parameter relating to a focal position of the energy beam and/or a deviation from a nominal focal position without the need for monitoring the build plane and imaging at least one part of the build plane in which the energy beam is incident. Thus, the actual spot size of the energy beam on the build plane does not have to be compared with a nominal or defined spot size.

Further, the inventive apparatus advantageously allows for determining the at least one parameter relating to the focal position without the need for the energy beam being guided onto the build plane. Instead, the at least one parameter relating to the focal position of the energy beam may also be determined with the energy beam not being guided into the process chamber, as the determination can be performed with a (minor) part of the energy beam that is split off the energy beam, preferably before the energy beam is guided into the process chamber.

The determination device may be adapted to translate a focal position of the energy beam and/or a deviation from a nominal focal position into an angle and/or an angular deviation from a nominal angle. As described before, it is not necessary to measure the actual spot size of the energy beam on the build plane directly, for example via capturing an image of the energy beam being incident on the build plane. Instead, the at least one parameter relating to the focal position and/or a deviation from a nominal focal position, can be represented by an angle and/or an angular deviation from the nominal angle.

Of course, as many parameters may influence the focal position of the energy beam, such as focal lengths of the various optical components used in the additive manufacturing apparatus, the at least one determined parameter may include any of those factors contributing to / affecting the focal position of the energy beam. In particular, the focal position itself can be determined or the parameter can represent a deviation from the nominal focal position. Thus, it is possible to adjust the focal position in that the deviation from the nominal focal position may be reduced, in particular fully compensated to ensure that the nominal focal position is met. Thus, a closed loop control is feasible based on the determined parameter.

According to an embodiment of the inventive apparatus, a beam splitter may be provided that is adapted to split a sub-part off the energy beam and guide the sub-part towards the determination device. Thus, it is possible to split the sub-part off the energy beam and use the remaining (major) part of the energy beam to irradiate build material, as described before. For example, only a minor part of the energy beam may be split off as sub-part, for example less than 1%, preferably 0.3% of the energy beam, wherein the remaining (99% or 99.7%) of the energy beam may be used for processing in the additive manufacturing process. Preferably, the beam splitter is arranged on or attached to a focusing optical unit that is adapted to focus the energy beam onto the build plane.

The beam splitter further allows for a confocal set up of the determination device, wherein the sub-part may be split of the energy beam and guided towards the determination device. Further, it is possible to simultaneously irradiate build material, i.e. perform the additive manufacturing process, and determine the at least one parameter relating to the focal position and/or the deviation between the actual focal position and the nominal focal position. Thus, the focal position of the energy beam may be determined throughout the additive manufacturing process, wherein it is in particular not necessary to use the whole energy beam for the determination process. Instead, both the determination process and the additive manufacturing process can be performed in parallel. This allows for monitoring the behavior of the energy beam, in particular the focal position of the energy beam while the additive manufacturing process is performed. Thus, the deviations from a nominal focal position that occur during the additive manufacturing process can immediately be corrected via a corresponding adjustment and/or a calibration of the energy beam. In other words, a closed loop control can be performed.

The beam splitter may preferably be built as a cover glass, in particular an inclined cover glass, through which the energy beam may be guided into a process chamber of the apparatus. The cover glass may preferably be arranged between a focusing optical unit of the apparatus and a beam guiding unit, e.g. a scanner, such as one or more moveable mirrors. The beam guiding unit is used to guide the energy beam in the build plane. Hence, the energy beam is focused via the focusing optical unit and is subsequently incident on the beam splitter (cover glass). The part of the energy beam that passes the cover glass is preferably guided to (incident on) the beam guiding unit and is guided into the process chamber and onto the build plate. Another protective glass may be provided that is arranged between the beam guiding unit and the build plane, delimiting the process chamber and protecting the beam guiding unit from residues generated in the process. The protective glass therefore, delimits the process chamber and is used to couple the energy beam into the process chamber. Both, the cover glass (beam splitter) and the protective glass protect (optical) components of the apparatus from residues generated in the additive manufacturing process.

As a minor part, e.g. 0.3%, of the energy beam is reflected at the cover glass (beam splitter), the cover glass may be used as a beam splitter, as described before. The cover glass may further be inclined in that it encloses an angle with the energy beam, preferably deviant from 0° / 90°. Thus, the cover glass may be arranged in an angle, e.g. 5° - 85°, preferably 45°, with respect to the energy beam incident on the cover glass. As the energy beam is incident on the cover glass, a (major) part of the energy beam is transmitted through the cover glass, wherein a (minor) sub-part is reflected at the cover glass and guided towards the determination device.

Advantageously, by using the cover glass as beam splitter, it is not necessary to involve another optical element and further the reflection of the energy beam at the cover glass can be used and is not wasted in the optical system of the apparatus.

Further, a refractive element may be provided, in particular a wedge plate, which is adapted to guide the sub-part of the energy beam and adapted to increase an angular deviation of the sub-part of the energy beam. Thus, the sub-part that has been split off the energy beam may be transmitted through the refractive element, wherein an angular deviation may be increased to increase the effect and allow for an improved determination of the angular deviation from the nominal angle. Hence, angular deviations that are present may be amplified to improve the determination process.

According to another embodiment of the inventive apparatus, the determination device may comprise a focusing element adapted to image the sub-part onto a detector. The sub-part that has been split off the energy beam may be focused, e.g. via a refracting lens, onto a detector. The term "focusing" in this context does not require that the focus of the sub-part lies in the detector plane. The term is to be understood in that a collimated or diverging sub-part that is incident on the focusing unit is focused and that the sub-part that is transmitted through the focusing element further propagates towards the detector. Therefore, the focal plane of the sub-part may lie between the focusing element and the detector.

Further, the inventive apparatus, in particular the determination device, may comprise an optical filtering element, in particular an aperture, which is adapted to filter at least one part of the sub-part with a defined focal position deviant from a nominal focal position. A deviation from the nominal focal position will result in an angular deviation of the sub-part, which may preferably be increased via the refractive element, in particular the wedge plate. Afterwards, the sub-part is incident on the focusing element, which focuses the sub-part. For example, the focal position of the sub-part may lie in the plane of the optical filtering unit allowing the sub-part pass the optical filtering unit. If the focal position of the sub-part lies before or after the optical filtering unit, a part of the sub-part is filtered in that it is absorbed via the optical filtering unit. After the optical filtering unit has been passed, the sub-part is incident on the detector.

Preferably, the determination device may be adapted to perform the determination of the at least one parameter relating to the focal position and/or the deviation from a nominal focal position based a determination of a spot size of the sub-part of the energy beam on the detector, in particular a comparison of the spot size of the sub-part with a reference spot size. According to this embodiment, the determination device may be adapted to determine the at least one parameter relating to the focal position and/or the deviation from a nominal focal position by determining the spot size of the sub-part of the energy beam on the detector. As described before, the sub-part may be split off the energy beam via the beam splitter, in particular via a cover glass, wherein the sub-part is guided towards the detector. The sub-part may pass a refractive element, such as a wedge plate, to increase the angular deviation, as also described before. Between the beam splitter and the detector a focusing element is arranged that focuses the diverging sub-part.

As the focal position of the sub-part lies between the focusing unit and the detector, the sub-part meets the detector plane defocused. Thereby, the size of the spot of the sub-part is related to the angle under which the sub-part is reflected at the beam splitter. Therefore, the angular deviation that is caused by the deviation from the nominal focal position is (directly) related to the size of the spot of the sub-part that is imaged onto the detector. In particular, the greater the deviation from the nominal focal position, the greater the angular deviation and the larger is the size of the spot on the detector. Hence, the actual focal length and the actual focal position of the energy beam can be derived from the spot size of the sub-part on the detector.

In other words, the central part of the sub-part may be used as reference beam, for example a part of the energy beam that is on the optical axis of the energy beam. Further, the determination device may make use of the dependency between the angular deviation and the angle under which the sub-part is reflected at the beam splitter. As the focal length of the optical system, in particular of the focusing optical unit that is used to focus the energy beam on the build plane, directly defines the angle under which the energy beam is incident on the beam splitter, the focal length is related to the angle of incidence. The larger the focal length of the focusing optic unit the smaller is the angle of incidence on the beam splitter, wherein the angle of incidence is defined between an edge beam of the energy beam and the surface of the beam splitter. Hence, a nominal angle can be defined, wherein an energy beam focused with a nominal focal length, i.e. having a nominal focal position, is incident on the beam splitter under the nominal angle.

Thus, the angle of incidence is translated into the angular deviation as the sub-part is reflected at the beam splitter. Hence, an energy beam passing through the focusing optical unit having a comparatively larger focal length will be incident on the beam splitter under a comparatively smaller angle of incidence (compared to an energy beam that is properly focused). This will generate a corresponding angle of reflection. Thus, the angle of reflection will deviate from the angle of reflection und which a properly focused energy beam is reflected. The smaller angle of reflection causes due to passing the focusing element a larger spot on the detector. In comparison, an energy beam passing through the focusing optical unit with a comparatively smaller focal length, i.e. smaller than a nominal focal length, will be reflected at the beam splitter under a comparatively larger angle of reflection causing a comparatively smaller spot on the detector.

Thus, by taking the spot size on the detector into calculation, the focal length of the focusing optical unit can be derived. Further, a nominal focal length can be defined, wherein due to the determination of the spot size of the sub-part, it can be verified and/or monitored, whether the actual focal length matches the nominal focal length. Thereby, it is possible to determine, whether the focal position of the energy beam meets the nominal focal position.

According to another embodiment of the inventive apparatus, the detector may be built as or comprise a high repetition rate detector. Thus, sensors with high response times and/or high local resolutions may be used that can, for example, be driven by frequencies about 100kHz or higher. This allows for determining the focal position (or deviations from a nominal focal position) in the rapid changing conditions in an additive manufacturing process. Therefore, even if the focal position of the energy beam changes rapidly, it is possible to determine the change of the focal position via the use of the high repetition rate sensor. The detector may in particular be built as or comprise at least two PSD-sensors (position sensitive device), preferably an arrangement of PSD-sensors and/or at least one line sensor. Each PSD-sensor may produce a signal, if the energy beam is incident on the PSD-sensor. By arranging multiple PSD-sensors in a defined spatial relation, e.g. in a row, it is possible to determine the size or changes in the size of the spot. Thus, the number of PSD-sensors generating a signal upon irradiation with the energy beam is related to the size of the spot of the energy beam and therefore, related to the angular deviation and the focal position or the deviation from a nominal focal position.

Preferably, the determination device may further be adapted to perform a power measurement of the energy beam. For example, the ratio between the sub-part and the whole energy beam may be known, wherein the power measurement of the sub-part may provide a conclusion on the power of the overall energy beam. The power/intensity of the energy beam, in particular the sub-part of the energy beam, may be determined via the detector.

According to another embodiment of the inventive apparatus, the apparatus may comprise a control unit, in particular an irradiation device, which is adapted to control the energy beam, wherein the determination device may be adapted to generate calibration data for controlling the energy beam, in particular for calibrating and/or adjusting the focal position of the energy beam. Thus, dependent on the at least one parameter relating to the focal position of the energy beam and/or a deviation from a nominal focal position, the determination device may generate calibration data that can be used for controlling the energy beam. Based on the calibration data, the control unit, in particular the irradiation device, may adjust the energy beam. For example, if a deviation from a nominal focal position occurs, the determination device may detect the deviation and generate calibration data. Subsequently, the control of the energy beam can be performed based on the calibration data in that the detected deviation can be reduced or compensated.

In particular, the apparatus may be adapted to control the energy beam in a closed loop. Thus, it is possible to continuously determine the at least one parameter relating to the focal position of the energy beam and/or the deviation from a nominal focal position, wherein the generated calibration data can be used in a feedback loop or closed loop, respectively. Thus, if a deviation from the nominal focal position occurs, the energy beam can be corrected immediately to avoid negative impacts on the additive manufacturing process.

Besides, the invention relates to a determination device for an apparatus for additively manufacturing of three-dimensional objects, in particular an inventive apparatus, as described before, which apparatus is adapted to generate an energy beam, wherein the determination device is adapted to determine at least one parameter relating to a focal position of the energy beam and/or a deviation from a nominal focal position, wherein the determination is based on an angular deviation of at least one part of the energy beam relative to a nominal angle.

Further, the invention may relate to a method for operating at least one apparatus for additively manufacturing three-dimensional objects by means of successive layerwise selective irradiation and consolidation of layers of a build material which can be consolidated by means of an energy beam, in particular an inventive apparatus, as described before, wherein at least one parameter relating to a focal position of the energy beam and/or a deviation from a nominal focal position is determined via a determination device, in particular an inventive determination device, as described before, wherein the determination is based on an angular deviation of at least one part of the energy beam relative to a nominal angle.

Self-evidently, all details, features and advantages described with respect to the inventive apparatus are fully transferable to the inventive determination device and the inventive method. In particular, the inventive method may be performed on the inventive apparatus, preferably using the inventive determination device.

Exemplary embodiments of the invention are described with reference to the Fig.

The Fig. are schematic diagrams, wherein
- Fig. 1: shows an inventive apparatus;
- Fig. 2: shows the detail II of Fig. 1;
- Fig. 3: shows the detail III of Fig. 1 for energy beams with different focal lengths; and
- Fig. 4: shows a detail of the determination device of the inventive apparatus 1, depicted in Fig. 1.

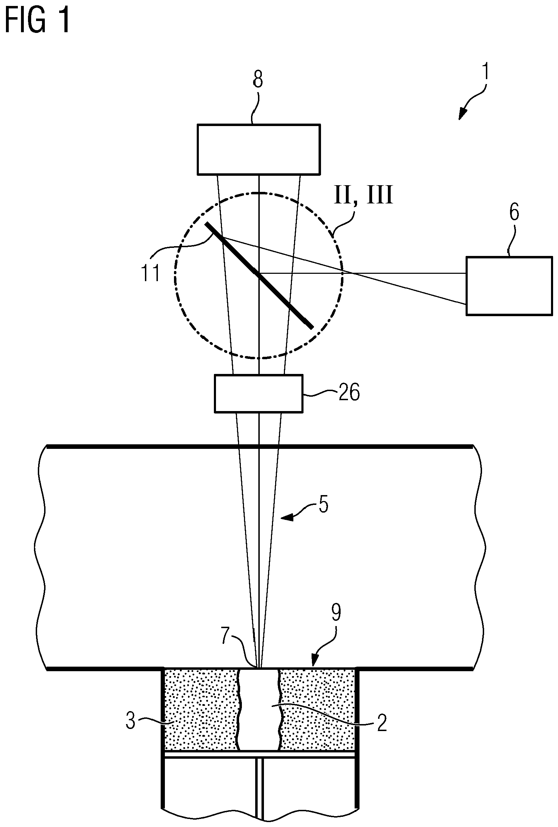

Fig. 1 shows an apparatus 1 for additively manufacturing of three-dimensional objects 2 by means of successive layerwise selective irradiation and consolidation of layers of a build material 3 which can be consolidated by means of an energy beam 5. The apparatus 1 comprises a determination device 6 which is adapted to determine at least one parameter relating to a focal position 7 of the energy beam 5 and/or a deviation from a nominal focal position, wherein the determination is based on an angular deviation of at least one part of the energy beam 5 relative to a nominal angle.

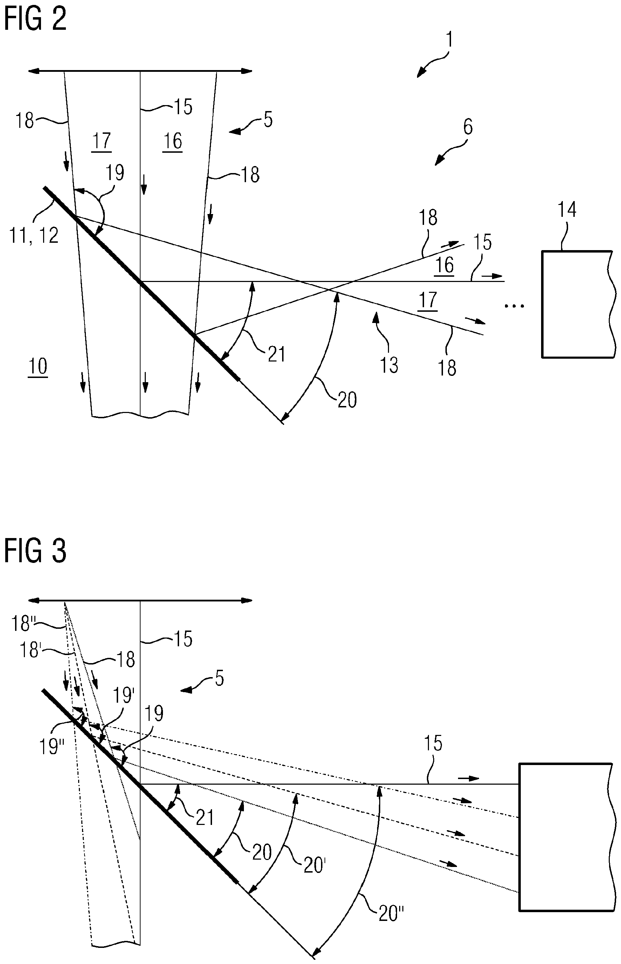

As can further be derived from Fig. 1, an irradiation device is provided that is adapted to generate and guide the energy beam 5. The irradiation device comprises, inter alia a focusing optical unit 8 that is adapted to focus the energy beam 5 onto a build plane 9, in which build material 3 is arranged that can be selectively irradiated to consolidate the build material 3 and thereby build the three-dimensional object 2. The energy beam 5 is incident on an inclined cover glass 11 that is used as a beam splitter 12. The part of the energy beam 5 that passes the cover glass 11 is guided to a beam guiding unit 26, such as a scanner. The energy beam 5 is coupled into a process chamber 10 of the apparatus 1 via protective glass (not shown). The splitting of the energy beam 5 at the cover glass 11 will be described with respect to Fig. 2.

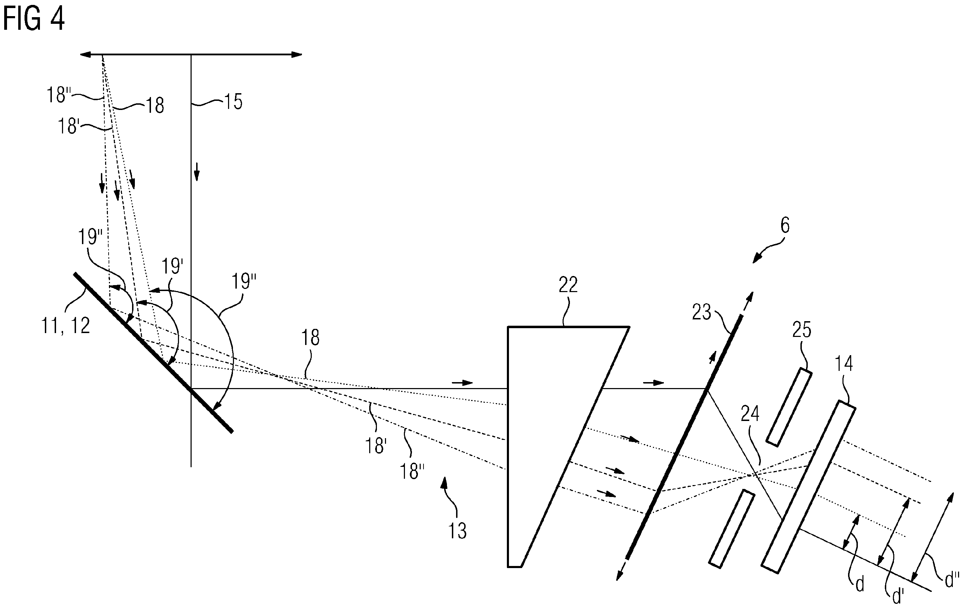

Fig. 2 shows the detail II of Fig. 1, wherein the energy beam 5 is incident on the cover glass 11 that is used as beam splitter 12. The energy beam 5 is transmitted through the cover glass 11 to a defined (major) part, for example to more than 99%, in particular to 99.7%. In other words, a sub-part 13 is split off the energy beam 5 and guided towards a detector 14 of the determination device 6. As can further be derived from Fig. 2, a central part 15 of the energy beam 5 is reflected at the beam splitter 12 and guided towards the detector 14, wherein the central part 15 can be used as reference beam, as can be described in detail with reference to Fig. 3, 4. In detail, a first part 16 (e.g. right half of the energy beam 5) of the energy beam 5 is reflected away from the detector 14 and a second part 17 (e.g. left half of energy beam 5) is reflected towards the detector 14.

In the situation that is depicted in Fig. 2, edge beams 18 are indicated that depict the limit of the second part 17 and the first part 16 of the energy beam 5, wherein the other edge is delimited by the central part 15. Of course, the major part of the first part 16 and the second part 17 is also transmitted through the beam splitter 12 as it is coupled through the cover glass 11 into the process chamber 10 to be focused on the build plane 9. Thus, if a reflected part of the energy beam 5 is addressed, only the (minor) part of the energy beam 5 is to be understood that is reflected at the beam splitter 12.

Fig. 2 depicts that the edge beam 18 of the second part 17 and the central part 15 mark or delimit the sub-part 13 that is guided towards the detector 14. In other words, the second part 17 of the energy beam 5 is partially reflected at the beam splitter 12 and guided as sub-part 13 towards the detector 14. As can be derived from Fig. 2, dependent on an angle of incidence 19 the edge beam 18 is incident on the beam splitter 12, the edge beam 18 is reflected at the beam splitter 12 under an angle of reflection 20. As the angle of incidence 19 under which the edge beam 18 is incident on the beam splitter 12 directly depends on the focal length of the focusing optical unit 8 that focuses the energy beam 5 on the build plane 9, the focal position and/or the focal length and/or a deviation from a nominal focal position can be translated into an angular deviation. In particular, a reference angle 21 can be defined for the central part 15 that stays the same independent of the focal length with which the energy beam 5 is focused onto the build plane 9.

Fig. 3 shows the detail III with different energy beams 5 that are focused with different focal lengths and therefore, comprise different focal positions, wherein different edge beams 18, 18' and 18"are indicated. As the angles of incidence 19, 19' and 19"depend on the focal length of the focusing optical unit 8 that is used to focus the energy beam 5, the focal lengths are translated into different angles of reflection 20, 20' and 20" under which the different edge beams 18, 18' and 18"are reflected at the beam splitter 12. Of course, the angle 21 for the central part 15 always stays the same as the central part 15 is the same for every focal length. As described before, the beam splitter 12 guides the reflected sub-part 13 to the detector 14, as will be described with respect to Fig. 4.

Fig. 4 shows the beam path of the sub-part 13 towards the detector 14 detail. Of course, although the three different energy beams 5 with different edge beams 18, 18' and 18" are depicted, only one energy beam 5 is present at the same time, as the other edge beams 18' and 18"only indicate the other energy beam or the change of focal lengths or the change of focal positions between the energy beams 5. First, the sub-part 13 is guided through a refractive element 22 (optional), wherein the refractive element 22 increases the angular deviation of the sub-part 13, as depicted via the edge beams 18, 18' and 18". Afterwards, the sub-part 13 is transmitted through a focusing element 23, for example a refracting lens, that focuses the sub-part 13, wherein a focal position 24 of the sub-part 13 is arranged in a plane of an optical filtering unit 25 that is built as aperture.

Thus, dependent on the angle of incidence 19, 19' and 19", the different edge beams 18, 18' and 18" are reflected under different angles of reflection 20, 20' and 20". Therefore, the spot size of the sub-part 13 on the detector 14 varies with the angle of incidence 19, 19' in 19", as described before. Thus, dependent on the spot size d, d' and d" that are assigned to the different sub-parts 13 of the energy beams 5 with different edge beams 18, 18' and 18" the focal length of the focusing optical unit 8 of the irradiation device can be derived. Hence, a comparison can be made between a nominal focal length and/or a nominal focal position and the actual focal position, as determined via the determination device 6. Of course, the deviations from a nominal focal position can therefore be identified and compensated.

To compensate the present deviation from a nominal focal position, the determination device 6 may generate calibration data based on which the irradiation device can be controlled to adjust the focal length of the focusing optical unit 8 and therefore, adjust the focal position of the energy beam 5. In other words, the determination device 6 may determine at least one parameter, for example the focal position of the energy beam 5 and/or a focal length of the focusing optical unit 8 and/or a deviation from a nominal focal position based on an angular deviation of at least one part of the energy beam 5 relative to a nominal angle. Dependent on which focal length and/or a focal position is desired and defined as nominal focal position or nominal focal length, respectively, an edge beam 18 may be defined. Thus, it is possible to compare the actual edge beam 18, 18' or 18"with the defined edge beam 18. Dependent on the angular deviation between the actual edge beam 18, 18' or 18"with the defined edge beam 18, the parameter relating to the focal position and/or the focal length can be determined.

As the spot sizes d, d' and d" directly relate to the corresponding focal length f, f' and f" that is used to focus the energy beam 5 and therefore, generate edge beams 18, 18' and 18", a direct control of the focal position and/or the focal length can be performed dependent on the angular deviation that affects the spot size d, d' and d" on the detector 14. Hence, the spot sizes d, d' and d" on the detector 14 are directly related to the focal length and therefore, to the focal position of the energy beam 5. Thus, dependent on the signal generated via the detector 14 the focal length and/or the focal position can be controlled during an additive manufacturing process.

The detector 14 is built as or comprises a high repetition rate detector, for example a PSD - sensor (position sensitive device) and/or a line sensor. To control the energy beam 5 in a closed loop, the apparatus 1 preferably comprises a control unit (not shown), in particular integrated into the irradiation device, which is adapted to control the energy beam 5 based on calibration data that are generated via the determination device 6.

Of course, the inventive method may be performed on the inventive apparatus 1.

## Claims

1. Apparatus (1) for additively manufacturing three-dimensional objects (2) by means of successive layerwise selective irradiation and consolidation of layers of a build material (3) which can be consolidated by means of an energy beam (5), **characterized by** a determination device (6) adapted to determine at least one parameter relating to a focal position (7) of the energy beam (5) and/or a deviation from a nominal focal position, wherein the determination is based on an angular deviation of at least one part of the energy beam (5) relative to a nominal angle.

2. Apparatus according to claim 1, **characterized in that** the determination device (6) is adapted to translate a focal position (7) of the energy beam (5) and/or a deviation from a nominal focal position into an angle and/or an angular deviation from a nominal angle.

3. Apparatus according to claim 1 or 2, **characterized by** a beam splitter (12) adapted to split a sub-part (13) off the energy beam (5) and guide the sub-part (13) towards the determination device (6), in particular the detector (14).

4. Apparatus according to one of the preceding claims, **characterized in that** the beam splitter (12) is built as a cover glass (11), in particular an inclined cover glass (11), through which the energy beam (5) is guided into a process chamber (10) of the apparatus (1).

5. Apparatus according to one of the preceding claims, **characterized by** a refractive element (22), in particular a wedge plate, adapted to guide the sub-part (13) of the energy beam (5) and adapted to increase an angular deviation of the sub-part (13) of the energy beam (5).

6. Apparatus according to one of the preceding claims, **characterized by** a focusing element (23) adapted to image the sub-part (13) onto a detector (14).

7. Apparatus according to one of the preceding claims, **characterized by** an optical filtering element (25), in particular an aperture, adapted to filter at least one part of the sub-part (13).

8. Apparatus according to one of the preceding claims, **characterized in that** the determination device (6) is adapted to perform the determination of the at least one parameter relating to the focal position (7) and/or the deviation from a nominal focal position based on a determination of a spot size (d, d', d") of the sub-part (13) of the energy beam (5) on the detector (14), in particular a ratio of the spot size (d, d', d") of the sub-part (13) with a reference spot size.

9. Apparatus according to one of the preceding claims, **characterized in that** the detector (14) is built as or comprises a high repetition rate detector.

10. Apparatus according to one of the preceding claims, **characterized in that** the detector (14) may be built as or comprise at least two PSD-sensors, preferably an arrangement of multiple PSD-sensors and/or a line sensor.

11. Apparatus according to one of the preceding claims, **characterized in that** the determination device (6) is adapted to perform a power measurement of the energy beam (5).

12. Apparatus according to one of the preceding claims, **characterized in that** the apparatus (1) comprises a control unit, in particular an irradiation device, adapted to control the energy beam (5), wherein the determination device (6) is adapted to generate calibration data for controlling the energy beam (5), in particular for calibrating the focal position (7) of the energy beam (5).

13. Apparatus according to one of the preceding claims, **characterized in that** the apparatus (1) is adapted to control the energy beam (5) in a closed loop.

14. Determination device (6) for an apparatus (1) for additively manufacturing three-dimensional objects (2), in particular an apparatus (1) according to one of the preceding claims, which apparatus (1) is adapted to generate an energy beam (5) **characterized in that** the determination device (6) is adapted to determine at least one parameter relating to a focal position (7) of the energy beam (5) and/or a deviation from a nominal focal position, wherein the determination is based on an angular deviation of at least one part of the energy beam (5) relative to a nominal angle.

15. Method for operating at least one apparatus (1) for additively manufacturing three-dimensional objects (2) by means of successive layerwise selective irradiation and consolidation of layers of a build material (3) which can be consolidated by means of an energy beam (5), **characterized in that** at least one parameter relating to a focal position (7) of the energy beam (5) and/or a deviation from a nominal focal position is determined via a determination device (6), wherein the determination is based on an angular deviation of at least one part of the energy beam (5) relative to a nominal angle.
